# EUROPÄISCHE PATENTSCHRIFT

(11) **EP 3 226 374 B1**
(45) Veröffentlichungstag und Bekanntmachung des Hinweises auf die Patenterteilung: **13.02.2019**
(21) Anmeldenummer: 16163535.4
(22) Anmeldetag: 01.04.2016
(51) Int. Cl.: H02J 3/36, G05B 13/04, H02J 3/00

(54) **VERFAHREN UND STEUEREINRICHTUNG ZUM STEUERN EINES STROMNETZES**
METHOD AND CONTROL DEVICE FOR CONTROLLING A POWER GRID
PROCEDE ET DISPOSITIF DE COMMANDE D'UN RESEAU ELECTRIQUE

(43) Veröffentlichungstag der Anmeldung: 04.10.2017
(73) Patentinhaber: Siemens Aktiengesellschaft, 80333 München (DE)
(72) Erfinder: Mesanovic, Amer, 80809 München (DE); Münz, Ulrich, 81673 München (DE)

(56) Entgegenhaltungen:
- EP-A2- 2 645 553
- US-A1- 2016 094 031

## Beschreibung

Zeitgemäße Stromnetze umfassen in der Regel eine Vielzahl von Netzkomponenten, wie zum Beispiel Stromgeneratoren, Verbraucherlasten, Stromleitungen, Steuereinrichtungen, Kraftwerke, Windkraftanlagen, Photovoltaikanlagen und/oder andere konventionelle oder erneuerbare Energiequellen. Die Stromnetze können hierbei zum Beispiel Stromversorgungsnetze, Übertragungsnetze, Verteilnetze oder Einspeisenetze sein.

Gegenwärtig steigt der Anteil erneuerbarer Energieerzeugung, insbesondere durch Windkraftanlagen und Photovoltaikanlagen in erheblichem Maße. Derartige erneuerbare Energieerzeuger werden in der Regel dort installiert, wo Wind und Sonne verfügbar sind und nicht primär - wie bei konventionellen Kraftwerken üblich - in der Nähe von Lastzentren. Daher ist regenerativ erzeugter Strom häufig über große Entfernungen zu übertragen. Für solche Übertragungen sind Gleichstromnetze oft kostengünstiger und effizienter. Durch einen verstärkten Zubau von Gleichstromnetzen entstehen vielerorts gemischte Wechselstrom/Gleichstromnetze deren Steuerung zunehmend komplexer wird, insbesondere insofern eine erneuerbar erzeugte Leistung in der Regel größeren Schwankungen unterworfen ist als konventionell erzeugte Leistung.

Kurzfristige Änderungen der Energieerzeugung oder des Energieverbrauchs können durch eine sogenannte Primärregelleistung ausgeglichen werden. Darüber hinaus können durch Konverter, die zwischen Wechselstromnetzen und Gleichstromnetzen angeordnet sind, Leistungsverschiebungen zwischen diesen Netzen vorgenommen werden.

Ein Verfahren zur Optimierung von Lastflüssen in gemischten Wechselstrom/Gleichstromnetzen ist aus dem Artikel "Probabilistic security constrained optimal power flow for a mixed HVAC and HVDC grid with stochastic infeed" von R. Wiget et al. zur Power Systems Computation Conference 2014 bekannt. Bei diesem Verfahren wird ein jeweiliger Lastfluss jedoch lediglich unter Berücksichtigung von stochastischen Last- und Erzeugungsänderungen optimiert.

Des Weiteren ist aus der US 2016/094031 A1 eine Methode zur Steuerung eines Stromnetzes mittels eines Verfahrens zur robusten Optimierung bekannt. Zur Steuerung eines Stromnetzes, umfassend einen PV-Bus (Spannung im Bus kann direkt gesteuert werden) und einen PQ-Bus (Spannung im Bus kann nicht direkt gesteuert werden), mittels eines Verfahrens zur robusten Optimierung mit einem ersten Toleranzbereich für eine Wirkleistung des PV-Busses und einem zweiten Toleranzbereich für eine Wirkleistung des PQ-Busses. Es wird mit dem Optimierungsprozess ein Spannungssollwert für den PV-Bus bestimmt, mit dem die Spannung am PV-Bus gesteuert wird

Aus der EP 2 645 553 A2 ist ein System umfassend einen Stromrichter zur Umwandlung von Wechselstrom in Gleichstrom bekannt. Es wird ein Verfahren und ein System für Gleichstromübertragung umfassend einen Stromrichter zur Umwandlung von Wechselstrom in Gleichstrom beschrieben. Ein Regler bestimmt eine Anzahl von Zweigen des Stromrichters, die jeweils für eine Pulsweitenmodulation eingerichtet sind, um basierend auf den Betriebsbedingungen des Stromrichters eine Kostenfunktion zu minimieren.

Es ist Aufgabe der vorliegenden Erfindung ein Verfahren, eine Steuereinrichtung, ein Computerprogrammprodukt sowie ein computerlesbares Speichermedium zum Steuern eines ein Wechselstromnetz und ein Gleichstromnetz umfassenden Stromnetzes anzugeben, die eine effizientere Steuerung des Stromnetzes erlauben.

Gelöst wird diese Aufgabe durch ein Verfahren mit den Merkmalen des Patentanspruchs 1, durch eine Steuereinrichtung mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Erfindungsgemäß werden zum Steuern eines Stromnetzes, das ein Wechselstromnetz und ein daran über einen Konverter gekoppeltes Gleichstromnetz umfasst, ein erster Lastfluss im Wechselstromnetz mittels eines ersten Lastflussmodells und ein zweiter Lastfluss im Gleichstromnetz mittels eines zweiten Lastflussmodells modelliert. Durch den Konverter wird ein Wirkleistungsfluss zwischen dem Wechselstromnetz und dem Gleichstromnetz in Abhängigkeit von einer Netzspannung des Gleichstromnetzes geregelt, wobei diese Abhängigkeit in einer Regelcharakteristik des Konverters mittels eines ersten Koppelparameters einstellbar ist. Erfindungsgemäß wird ein erster Toleranzbereich für eine Einspeise-Wirkleistung eines Generators und/oder für eine Wirklast eines Verbrauchers eingelesen. Weiterhin wird ein Prozess zur robusten Optimierung einer vorgegebenen Kostenfunktion unter Benutzung des ersten Toleranzbereichs als Robuste-Optimierungs-Unsicherheit ausgeführt, wobei mittels des ersten und zweiten Lastflussmodells der erste und der zweite Lastfluss, der Wirkleistungsfluss, die Netzspannung des Gleichstromnetzes sowie der erste Koppelparameter kombiniert werden und der erste Koppelparameter derart bestimmt wird, dass die Kostenfunktion optimiert wird. Mittels des so bestimmten ersten Koppelparameters wird die Regelcharakteristik des Konverters eingestellt.

Verfahren zur sogenannten robusten Optimierung sind eine spezifische Klasse von numerischen Optimierungsverfahren, die unsichere oder ungenaue Parameter bei der Optimierung berücksichtigen können. Insbesondere können hierbei erste Größen derart optimiert werden, dass vorgegebene Nebenbedingungen für einen ganzen Bereich von unsicheren oder schwankenden zweiten Größen, hier für den ersten Toleranzbereich, erfüllt werden. Ein derartiger Bereich von unsicheren zweiten Größen wird im Zusammenhang mit Verfahren zur robusten Optimierung häufig auch als Robuste-Optimierungs-Unsicherheit, robust optimization uncertainty oder kurz als uncertainty bezeichnet.

Zur Durchführung des erfindungsgemäßen Verfahrens sind eine Steuereinrichtung, ein Computerprogrammprodukt sowie ein computerlesbares Speichermedium vorgesehen.

Durch Verwendung eines Prozesses zur robusten Optimierung zusammen mit dem ersten Toleranzbereich als robuste Optimierungs-Unsicherheit kann die Regelcharakteristik des Konverters optimiert werden, auch wenn die tatsächliche Einspeise-Wirkleistung bzw. Wirklast nicht genau vorab bekannt ist oder Schwankungen unterworfen ist. Somit kann das Stromnetz insbesondere bei volatilen Generatoren und Verbrauchern in der Regel in stabiler Weise gesteuert werden. Dies ist insbesondere bei gemischten Wechselstrom/Gleichstromnetzen mit Multiterminal-Gleichstromnetzen Vorteil.

Die Optimierung der Regelcharakteristik des Konverters kann die Stabilität des Stromnetzes auch insofern erhöhen, als das Stromnetz auch ohne direkten Eingriff der Steuereinrichtung für gewisse Zeitintervalle in geregelter Weise innerhalb seiner Betriebsgrenzen betrieben werden kann. Eine solche Steuerung benötigt nur einen geringen Kommunikationsaufwand zwischen den beteiligten Netzelementen.

Vorteilhafte Ausführungsformen und Weiterbildungen der Erfindung sind in den abhängigen Ansprüchen angegeben.

Nach einer vorteilhaften Ausführungsform der Erfindung kann ein zweiter Toleranzbereich für eine Netzfrequenz des Wechselstromnetzes, für eine Netzspannung des Gleichstromnetzes und/oder für eine Leitungsauslastung im Stromnetz eingelesen werden. Der Prozess zur robusten Optimierung kann dann mit dem zweiten Toleranzbereich als Nebenbedingung ausgeführt werden. Der zweite Toleranzbereich kann hierbei z.B. als Intervall angegeben sein, innerhalb dessen die Netzfrequenz, die Netzspannung des Gleichstromnetzes bzw. die Leitungsauslastung liegen müssen oder sollen. Durch den Prozess zur robusten Optimierung kann die durch den zweiten Toleranzbereich repräsentierte Nebenbedingung für über den gesamten ersten Toleranzbereich schwankende Einspeise-Wirkleistungen bzw. Wirklasten erfüllt werden.

Nach einer vorteilhaften Weiterbildung der Erfindung kann der Wirkleistungsfluss in Abhängigkeit von einer Netzfrequenz des Wechselstromnetzes geregelt werden, wobei diese Abhängigkeit in der Regelcharakteristik des Konverters mittels eines zweiten Koppelparameters einstellbar ist. Die Netzfrequenz sowie der zweite Koppelparameter können mittels des ersten und zweiten Lastflussmodells in den Prozess zur robusten Optimierung einbezogen werden, und der zweite Koppelparameter kann derart bestimmt werden, dass die Kostenfunktion optimiert wird. Die Regelcharakteristik des Konverters kann dann mittels des so bestimmten zweiten Koppelparameters eingestellt werden. Dies ist insofern vorteilhaft, als mit dem zweiten Koppelparameter ein weiterer Freiheitsgrad im Stromnetz optimiert werden kann, was in der Regel zu besseren Optimierungsergebnissen führt.

Weiterhin kann eine Einspeise-Wirkleistung eines Generators im Wechselstromnetz in Abhängigkeit von einer Netzfrequenz des Wechselstromnetzes geregelt werden, wobei diese Abhängigkeit in einer Regelcharakteristik des Generators mittels eines dritten Koppelparameters einstellbar ist. Die Einspeise-Wirkleistung des Generators sowie der dritte Koppelparameter können mittels des ersten Lastflussmodells in den Prozess zur robusten Optimierung einbezogen werden, und der dritte Koppelparameter kann derart bestimmt werden, dass die Kostenfunktion optimiert wird. Die Regelcharakteristik des Generators kann dann mittels des so bestimmten dritten Koppelparameters eingestellt werden.

Analog dazu kann eine Einspeise-Wirkleistung eines Generators im Gleichstromnetz in Abhängigkeit von einer Netzspannung des Gleichstromnetzes geregelt werden, wobei diese Abhängigkeit in einer Regelcharakteristik des Generators mittels eines vierten Koppelparameters einstellbar ist. Die Einspeise-Wirkleistung des Generators sowie der vierte Koppelparameter können mittels des zweiten Lastflussmodells in den Prozess zur robusten Optimierung einbezogen werden, und der vierte Koppelparameter kann derart bestimmt werden, dass die Kostenfunktion optimiert wird. Die Regelcharakteristik des Generators kann dann mittels des so bestimmten vierten Koppelparameters eingestellt werden.

Wie oben bereits erwähnt, ist dies ist insofern vorteilhaft, als mit dem dritten bzw. vierten Koppelparameter ein weiterer Freiheitsgrad im Stromnetz optimiert werden kann, was in der Regel zu besseren Optimierungsergebnissen führt. Insbesondere kann eine Einspeisung von Generatoren optimiert werden.

Nach einer vorteilhaften Ausführungsform der Erfindung kann die Regelung des Wirkleistungsflusses und/oder einer Einspeise-Wirkleistung mittels eines Proportionalreglers erfolgen. Ein solcher Proportionalregler wird häufig auch als P-Regler bezeichnet und erlaubt eine besonders einfach modellierbare und optimierbare Regelung. Der Proportionalregler kann den Wirkleistungsfluss bzw. die Einspeise-Wirkleistung in linearer Abhängigkeit von der Netzspannung des Gleichstromnetzes und/oder von der Netzfrequenz des Wechselstromnetzes regeln. Die linearen Abhängigkeiten dieser Regelung können hierbei jeweils durch den ersten, zweiten, dritten und/oder vierten Koppelparameter als Proportionalitätskonstante vermittelt werden. Eine derartige Proportionalitätskonstante wird häufig auch als Steilheit, Verstärkungsfaktor oder proportional gain des Proportionalreglers bezeichnet. Proportionalregler für die Regelung der Einspeise-Wirkleistung in linearer Abhängigkeit von der Netzfrequenz des Wechselstromnetzes können auch zur Modellierung von Primärregelleistungseingriffen des Generators oder des Konverters verwendet werden.

Weiterhin kann eine aktuelle Einspeise-Wirkleistung des Generators und/oder eine aktuelle Wirklast des Verbrauchers als physikalische Betriebsgröße in den Prozess zur robusten Optimierung einbezogen werden. Ein derartige Berücksichtigung aktuell gemessener Betriebsgrößen erlaubt es, die Koppelparameter situationsbezogen und damit in der Regel besser zu optimieren.

Gemäß einer weiteren Ausführungsform der Erfindung kann eine Angabe über einen Referenz-Wirkleistungsfluss des Konverters, über eine Referenz-Netzgleichspannung des Konverters und/oder über eine Referenz-Wirkleistung des Generators als Ergebnis des Prozesses zur robusten Optimierung zum Konverter und/oder zum Generator als Sollwert übermittelt werden. Dies ist insofern vorteilhaft, als mit derartigen Sollwerten weitere Freiheitsgrade im Stromnetz optimiert werden können, was in der Regel zu besseren Optimierungsergebnissen führt.

Nach einer vorteilhaften Ausführungsform der Erfindung umfasst das erste Lastflussmodell und/oder das zweite Lastflussmodell ein System von Lastflussgleichungen. Insbesondere kann hierbei eine Lastflussgleichung für das Wechselstromnetz durch eine sogenannte DC-Lastflussgleichung für Wechselstromnetze approximiert werden, was die Modellierung vereinfacht.

Weiterhin kann das System von Lastflussgleichungen ein System von linearisierten Lastflussgleichungen umfassen. Die Lastflussgleichungen können z.B. linearisiert werden, indem höhere Terme einer Abweichung einer Netzspannung von einer Referenz-Netzspannung vernachlässigt werden. Linearisierte Lastflussgleichungen lassen sich meist erheblich einfacher behandeln als nichtlineare Lastflussgleichungen. Resultierende lineare Optimierungsprobleme sind in der Regel numerisch stabil und schneller berechenbar, wofür häufig eine Vielzahl von Standardprogrammen verfügbar ist.

Darüber hinaus können in der Kostenfunktion Leistungsverluste im Stromnetz, Dispatch-Verluste, Primärregelleistungsverluste und/oder Abweichungen zwischen aktuellen Betriebsgrößen und Referenz-Betriebsgrößen gewichtet werden. Vorzugsweise können die angegebenen Verluste minimiert werden.

Ein Ausführungsbeispiel der Erfindung wird nachfolgend anhand der Zeichnung näher erläutert. Dabei zeigen jeweils in schematischer Darstellung:
- Figur 1: einen an ein Wechselstromnetz gekoppelten Generator,
- Figur 2: einen an ein Wechselstromnetz und ein Gleichstromnetz gekoppelten Konverter,
- Figur 3: ein Ersatzschaltbild des Konverters und
- Figur 4: ein Stromnetz mit mehreren über ein Gleichstromnetz gekoppelten Wechselstromnetzen.

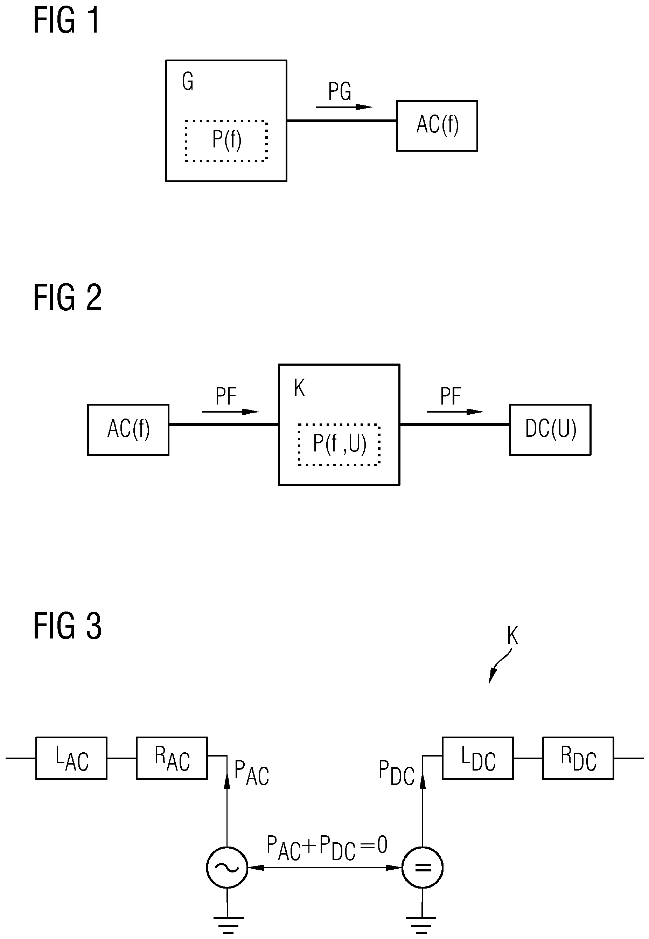

Figur 1 zeigt einen an ein Wechselstromnetz AC gekoppelten Generator G, zum Beispiel ein konventionelles Kraftwerk zum Einspeisen von Wirkleistung PG in das Wechselstromnetz AC.

Das Wechselstromnetz AC wird mit einer Netzfrequenz f betrieben. Die Wirkleistung PG wird vom Generator G in das Wechselstromnetz AC eingespeist, d.h. eine positive Wirkleistung fließt vom Generator G in das Wechselstromnetz AC.

Der Generator G umfasst einen Proportionalregler P(f) der die Einspeisung der Wirkleistung PG in linearer Abhängigkeit von der Netzfrequenz f regelt und steuert. Für die Wirkleistung gilt PG = PG_{ref} - KG_{f} * (f - f_{ref}). Hierbei ist KG_{f} eine positive Proportionalitätskonstante als Koppelparameter zur Kopplung der einzuspeisenden Wirkleistung PG mit der Netzfrequenz f. Dieser Koppelparameter KG_{f} wird häufig auch als Steilheit, Verstärkungsfaktor oder proportional gain des Proportionalreglers P(f) bezeichnet. Der Koppelparameter KG_{f} bestimmt oder beeinflusst zumindest eine Regelcharakteristik des Proportionalreglers P(f) und ist von außen einstellbar. PG_{ref} bezeichnet eine Referenz-Wirkleistung oder Sollwirkleistung des Generators G. Weiterhin bezeichnet f_{ref} eine Referenz-Netzfrequenz oder Sollnetzfrequenz des Wechselstromnetzes AC. Ein solcher Proportionalregler P(f) wird häufig auch als P(f)-Droop-Regler bezeichnet.

Figur 2 zeigt einen an ein Wechselstromnetz AC sowie an ein Gleichstromnetz DC gekoppelten Konverter K in schematischer Darstellung. Das Wechselstromnetz AC wird wie oben beschrieben mit einer Netzfrequenz f betrieben. Das Gleichstromnetz DC weist eine Netzspannung, das heißt eine Netzgleichspannung U auf. Das Wechselstromnetz AC und das Gleichstromnetz DC können jeweils zum Beispiel Stromversorgungsnetze, Übertragungsnetze, Verteilnetze oder Einspeisenetze sein. Sie können jeweils eine Vielzahl von Netzkomponenten, wie zum Beispiel Stromgeneratoren, konventionelle oder erneuerbare Energiequellen, Kraftwerke, Photovoltaikanlagen, Windkraftanlagen, Verbraucherlasten und Stromleitungen umfassen.

Der Konverter K dient zum Umsetzen zwischen einer Netzwechselspannung des Wechselstromnetzes AC und der Netzgleichspannung U des Gleichstromnetzes DC und zur energetischen Kopplung des Wechselstromnetzes AC mit dem Gleichstromnetz DC. Derartige Konverter erlauben es in der Regel, Strom- und Wirkleistungsflüsse zwischen Gleichstromnetzen und Wechselstromnetzen in großen Bereichen frei zu steuern und damit große Leistungsverschiebungen zwischen Gleichstrom- und Wechselstromnetzen vorzunehmen.

Der Konverter K steuert und überträgt einen Wirkleistungsfluss PF zwischen dem Wechselstromnetz AC und dem Gleichstromnetz DC. Im vorliegenden Ausführungsbeispiel ist der Wirkleistungsfluss PF vom Wechselstromnetz AC zum Gleichstromnetz DC mit positiven Vorzeichen gewählt. Alternativ ist eine entgegengesetzte Konvention wählbar.

Der Konverter K verfügt über einen Proportionalregler P(f,U), der den Wirkleistungsfluss PF in linearer Abhängigkeit von der Netzfrequenz f und der Netzspannung U regelt und steuert. Für den Wirkleistungsfluss ergibt sich PF = PF_{ref} - Kᵤ * (U - U_{ref}) + K_{f} * (f - f_{ref}). K_{f} und Kᵤ sind jeweils positive Proportionalitätskonstanten als Koppelparameter zur Kopplung des Wirkleistungsflusses PF an die Netzfrequenz f bzw. die Netzspannung U. Derartige Koppelparameter werden häufig auch als Steilheit, Verstärkungsfaktor oder proportional gain des Proportionalreglers P(f,U) bezeichnet. Die Koppelparameter K_{f} und Kᵤ bestimmen oder beeinflussen zumindest eine Regelcharakteristik des Proportionalreglers P(f,U) und sind von außen einstellbar. PF_{ref} bezeichnet einen Referenz-Wirkleistungsfluss oder Soll-Wirkleistungsfluss des Konverters K. Weiterhin bezeichnet U_{ref} eine Referenz-Netzgleichspannung oder Soll-Netzgleichspannung des Gleichstromnetzes DC bzw. der Gleichstromseite des Konverters K. Wie oben bereits ausgeführt, bezeichnet f_{ref} die Referenz-Netzfrequenz oder SollNetzfrequenz des Wechselstromnetzes AC. Der Proportionalregler P(f,U) wird häufig auch als P(f,U)-Droop-Regler bezeichnet.

Der Koppelparameter K_{f} ist vorzugsweise positiv, da überschüssige Wirkleistung im Wechselstromnetz AC zu einer Erhöhung der Netzfrequenz f führt und die überschüssige Wirkleistung vorteilhafterweise kompensiert werden kann, indem sie in das Gleichstromnetz DC eingespeist wird. Der Koppelparameter Kᵤ ist vorzugsweise positiv, da eine gegenüber der Referenz-Netzgleichspannung U_{ref} erhöhte Netzspannung U vorteilhafterweise kompensiert werden kann, indem Wirkleistung vom Gleichstromnetz DC in das Wechselstromnetz AC eingespeist wird.

Figur 3 zeigt ein Ersatzschaltbild des Konverters K in schematischer Darstellung. Der linke Zweig des Ersatzschaltbildes modelliert hierbei ein elektrisches Verhalten des Konverters K im Wechselstromnetz AC mittels einer Induktivität L_{AC} und einem dazu in Serie geschalteten Widerstand R_{AC}. Ein in den linken Zweig, das heißt in das Wechselstromnetz AC eingespeister Wirkleistungsfluss ist mit P_{AC} bezeichnet. Analog dazu modelliert der rechte Zweig des Ersatzschaltbildes ein elektrisches Verhalten des Konverters K im Gleichstromnetz DC mittels einer Induktivität L_{DC} und einem dazu in Serie geschalteten Widerstand R_{DC}. Ein in den rechten Zweig, das heißt ins Gleichstromnetz DC eingespeister Wirkleistungsfluss ist mit P_{DC} bezeichnet. Nach der obigen Vorzeichenkonvention für den Wirkleistungsfluss PF gilt PF = P_{DC} = -P_{AC}, sodass für die Wirkleistungsbilanz gilt: P_{DC} + P_{AC} = 0.

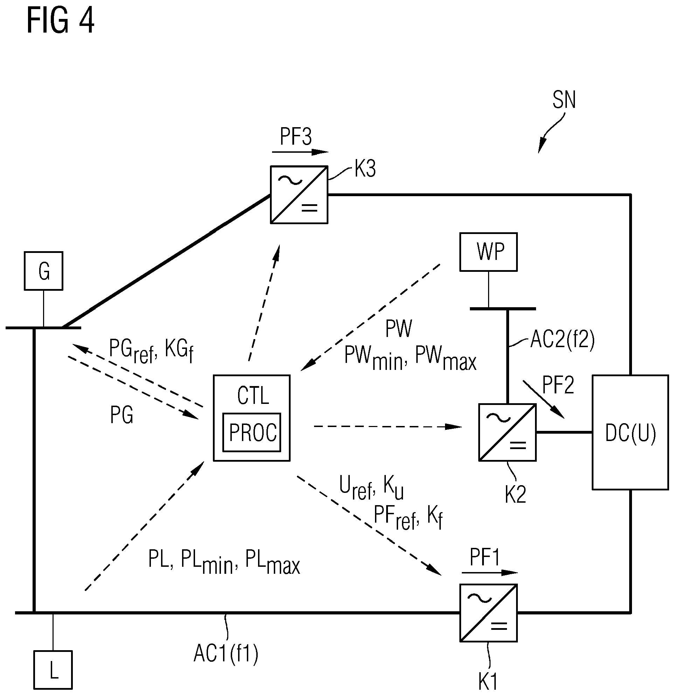

Figur 4 zeigt ein Stromnetz SN mit mehreren über ein Gleichstromnetz DC gekoppelten Wechselstromnetzen AC1 und AC2 in schematischer Darstellung. Das Stromnetz SN kann zum Beispiel ein Stromversorgungsnetz, Übertragungsnetz, Verteilnetz oder Einspeisenetz sein. Es kann eine Vielzahl von Netzkomponenten wie zum Beispiel Stromgeneratoren, konventionelle oder erneuerbare Energiequellen, Kraftwerke, Photovoltaikanlagen, Windkraftanlagen, Verbraucherlasten und Stromleitungen umfassen. Das Gleichstromnetz DC, zum Beispiel ein Hochspannungs-Gleichstrom-Übertragungssystem (HGÜ-System), weist eine Netzspannung U wie oben beschrieben auf. Das Wechselstromnetz AC1 wird mit einer Netzfrequenz f1 und das Wechselstromnetz AC2 einer Netzfrequenz f2 betrieben.

Das Wechselstromnetz AC1 umfasst einen Generator G, der zur Regelung seiner Einspeise-Wirkleistung wie oben beschrieben über einen P(f)-Proportionalregler verfügt. Darüber hinaus ist im Wechselstromnetz AC1 ein Verbraucher L vorhanden, der dem Wechselstromnetz AC1 eine Wirklast entzieht.

Das Wechselstromnetz AC2 umfasst eine erneuerbare Energiequelle WP, zum Beispiel eine Windkraftanlage oder eine Photovoltaikanlage.

Das Wechselstromnetz AC2 ist über einen Konverter K2 mit dem Gleichstromnetz DC gekoppelt. Weiterhin ist das Wechselstromnetz AC1 sowohl über einen Konverter K1 als auch über einen Konverter K3 mit dem Gleichstromnetz DC gekoppelt. Die Konverter K1, K2 und K3 sind wie oben beschrieben ausgestaltet und verfügen insbesondere jeweils über einen P(f,U)-Proportionalregler. Stromleitungen des Stromnetzes SN sind in Figur 4 durch verdickte Linien angedeutet.

Zur Steuerung verfügt das Stromnetz SN über eine Steuereinrichtung CTL, zum Beispiel ein so genanntes control and protection system, das häufig auch als CPS abgekürzt wird. Die Steuereinrichtung CTL umfasst einen oder mehrere Prozessoren PROC zum Ausführen aller Verfahrensschritte der Steuereinrichtung CTL.

Als Eingangsgrößen zur Steuerung des Stromnetzes SN empfängt die Steuereinrichtung CTL eine Vielzahl physikalischer Betriebsgrößen von Netzkomponenten des Stromnetzes SN, insbesondere von Konvertern, hier K1, K2 und K3, von Generatoren, hier G und WP, von Verbrauchern, hier L, und/oder von Übertragungsleitungen des Stromnetzes SN. Dies können insbesondere regelungstechnische oder bauartbedingte Betriebsgrößen wie Leistung, Wirkleistung, Blindleistung, Wirklast, Netzfrequenz oder so genannte PMU-Messwerte wie Spannung, Strom oder Phasenwinkel sein. Darüber hinaus können auch diskrete Betriebsgrößen, die eine Unterbrechung, einen Kurzschluss oder eine Zuschaltung von Übertragungsleitungen angeben, bei der Steuerung berücksichtigt werden.

Anhand der erfassten physikalischen Betriebsgrößen des Stromnetzes SN werden erste Lastflüsse in den Wechselstromnetzen AC1 und AC2 mittels eines ersten Lastflussmodells und ein zweiter Lastfluss im Gleichstromnetz DC mittels eines zweiten Lastflussmodells modelliert. Das erste bzw. zweite Lastflussmodell modelliert und/oder simuliert hierbei ein Verhalten der Wechselstromnetze AC1 und AC2 bzw. des Gleichstromnetzes DC abhängig von Betriebsgrößen der jeweils zugehörigen Netzkomponenten. Insbesondere werden hierbei die Regelcharakteristiken der Proportionalregler der Generatoren G und WP sowie der Konverter K1, K2 und K3 bei der Modellierung bzw. Simulation einbezogen.

Im vorliegenden Ausführungsbeispiel umfassen das erste und zweite Lastflussmodell jeweils ein System von linearisierten Lastflussgleichungen. Insbesondere kann eine jeweilige Lastflussgleichung für das Wechselstromnetz AC1 und/oder AC2 durch eine DC-Lastflussgleichung approximiert werden. Die linearisierten Lastflussgleichungen modellieren ein um Referenz-Betriebsgrößen linearisiertes Verhalten der Wechselstromnetze AC1, AC2 bzw. des Gleichstromnetzes DC abhängig von aktuellen Betriebsgrößen der jeweils zugehörigen Netzkomponenten. Die Linearisierung vereinfacht eine Berechnung von optimierten Parametern und anderen Steuerparametern erheblich.

Die Konverter K1, K2 und K3 sind hinsichtlich Funktion und Implementierung jeweils realisiert, wie im Zusammenhang mit Figur 2 beschrieben. Der Konverter K1 steuert und regelt einen Wirkleistungsfluss PF1 zwischen dem Wechselstromnetz AC1 und dem Gleichstromnetz DC, der Konverter K2 steuert und regelt einen Wirkleistungsfluss PF2 zwischen dem Wechselstromnetz AC2 und dem Gleichstromnetz DC und der Konverter K3 steuert und regelt einen Wirkleistungsfluss PF3 zwischen dem Wechselstromnetz AC1 und dem Gleichstromnetz DC. Eine jeweilige Regelcharakteristik ist hierbei durch die Steuereinrichtung CTL einstellbar und erfolgt jeweils wie im Zusammenhang mit Figur 2 beschrieben. Ein Datenaustausch zwischen den Konvertern K1, K2, K3 und der Steuereinrichtung CTL wird im Folgenden am Beispiel des Konverters K1 stellvertretend für die anderen Konverter K2 und K3 beschrieben.

Im Rahmen der Steuerung des Stromnetzes SN werden aktuelle physikalische Betriebsgrößen von Netzkomponenten des Stromnetzes SN, wie durch strichlierte Pfeile angedeutet, zur Steuereinrichtung CTL übermittelt. Hierbei wird vom Generator G eine Angabe über eine aktuelle Wirkleistung PG, die der Generator G in das Wechselstromnetz AC1 einspeist, zur Steuereinrichtung CTL übermittelt. Weiterhin wird von der erneuerbaren Energiequelle WP eine Angabe über eine aktuelle Wirkleistung PW, die die erneuerbare Energiequelle WP in das Wechselstromnetz AC2 einspeist, zur Steuereinrichtung CTL übermittelt. Ferner wird zur Steuereinrichtung CTL eine Angabe über eine aktuelle Wirklast PL des Verbrauchers L übermittelt.

Darüber hinaus werden von der erneuerbaren Energiequelle WP eine Angabe über eine minimal zu erwartende Einspeise-Wirkleistung PWₘᵢₙ der erneuerbaren Energiequelle WP sowie eine Angabe über eine maximal zu erwartende Einspeise-Wirkleistung PWₘₐₓ der erneuerbaren Energiequelle WP zur Steuereinrichtung CTL übermittelt. Analog dazu werden vom Verbraucher L eine Angabe über eine minimal zu erwartende Wirklast PLₘᵢₙ des Verbrauchers L sowie eine Angabe über eine maximal zu erwartende Wirklast PLₘₐₓ des Verbrauchers L zur Steuereinrichtung CTL übermittelt. Hierbei bilden das Intervall [PWₘᵢₙ, PWₘₐₓ] einen ersten Toleranzbereich für die zu erwartende Einspeise-Wirkleistung der erneuerbaren Energiequelle WP und entsprechend das Intervall [PLₘᵢₙ, PLₘₐₓ] einen ersten Toleranzbereich für die zu erwartende Wirklast des Verbrauchers L. Die übermittelten ersten Toleranzbereiche [PWₘᵢₙ, PWₘₐₓ] und [PLₘᵢₙ, PLₘₐₓ] sind im vorliegenden Ausführungsbeispiel typischerweise 15 bis 60 Minuten lang gültig.

Nach Ablauf eines jeweiligen Gültigkeitszeitraums werden aktualisierte erste Toleranzbereiche übermittelt. Mit einem jeweiligen ersten Toleranzbereich kann vorzugsweise eine Angabe über einen Gültigkeitszeitraum dieses ersten Toleranzbereiches übermittelt werden.

Ferner werden für die Steuerung des Stromnetzes SN zweite Toleranzbereiche für die Netzfrequenzen f1 und f2, für die Netzgleichspannung U sowie für eine Auslastung der Stromleitungen, Generatoren und/oder Konverter als Nebenbedingungen vorgegeben. Als zweite Toleranzbereiche können vorzugsweise ein Intervall [fₘᵢₙ, fₘₐₓ] für die Netzfrequenzen f1 und f2 sowie ein Intervall [Uₘᵢₙ, Uₘₐₓ] für die Netzgleichspannung U vorgegeben werden. Weiterhin wird eine Referenz-Netzfrequenz f_{ref}, z.B. 50 Hz, für die Wechselstromnetze AC1 und AC2 vorgegeben.

Anhand der übermittelten und aktuell vorliegenden Betriebsgrößen, insbesondere der Angaben über PG, PW, PL, U, f1, f2 und anderer Betriebsgrößen der Wechselstromnetze AC1, AC2 und des Gleichstromnetzes DC werden Lastflüsse in den Wechselstromnetzen AC1, AC2 anhand des ersten Lastflussmodells und Lastflüsse im Gleichstromnetz DC anhand des zweiten Lastflussmodells durch die Steuereinrichtung CTL modelliert. Die Konverter K1, K2 und K3 werden dabei vermöge ihrer P(f,U)-Proportionalregler modelliert. Hierdurch wird das Gleichstromnetz DC mit den Wechselstromnetzen AC1 und AC2 modelltechnisch gekoppelt. Ferner wird der Generator G und seine Einspeise-Wirkleistung PG vermöge seines P(f)-Proportionalreglers modelliert. Analog dazu kann ein im Gleichstromnetz DC gegebenenfalls vorhandener Energieerzeuger anhand eines P(U)-Proportionalreglers modelliert werden.

Darüber hinaus werden mögliche Last- und Erzeugungsänderungen oder Last- und Erzeugungsunsicherheiten mittels des ersten Toleranzbereichs [PWₘᵢₙ, PWₘₐₓ] für die Einspeise-Wirkleistung der erneuerbaren Energiequelle WP sowie mittels des ersten Toleranzbereichs [PLₘᵢₙ, PLₘₐₓ] für die Wirklast des Verbrauchers L modelliert. Innerhalb dieser Intervalle kann sich die tatsächliche Erzeugung bzw. Last beliebig ändern.

Schließlich werden im Betrieb einzuhaltende Nebenbedingungen durch die zweiten Toleranzbereiche für die Netzfrequenzen f1 und f2, für die Netzspannung U und für die Auslastung der Stromleitungen modelliert. Die Referenz-Netzfrequenz f_{ref} wird bei der Modellierung vorzugsweise vorgegeben.

Die modellierten Lastflüsse, Netzkomponenten, Unsicherheiten und Nebenbedingungen werden in ein Optimierungsproblem integriert, das die Energieerzeugung, die Lastflüsse sowie die Koppelparameter derart bestimmt, dass eine vorgegebene Kostenfunktion unter Einhaltung der Nebenbedingungen optimiert wird.

In die Kostenfunktion können vorzugsweise Leistungsverluste in den Wechselstromnetzen AC1 und AC2 oder im Gleichstromnetz DC, Dispatch-Verluste, Dispatch-Kosten, Primärregelleistungsverluste und/oder Primärregelleistungskosten in vorgegebener Gewichtung eingehen. Die Kostenfunktion kann dann unter Berücksichtigung der obigen Nebenbedingungen hinsichtlich einer maximal möglichen Frequenzabweichung in den Wechselstromnetzen AC1 und AC2, einer maximal zulässigen Spannungsabweichung im Gleichstromnetz DC und einer maximal zulässigen Leitungsauslastung aller Leitungen, Generatoren und/oder Konverter im Stromnetz SN minimiert werden.

Erfindungsgemäß wird das Optimierungsproblem numerisch mittels eines Prozesses zur robusten Optimierung gelöst. Eine solche robuste Optimierung erlaubt es, die gesuchten Größen zu optimieren, wobei die obigen Nebenbedingungen über die ganzen ersten Toleranzbereiche hinweg eingehalten werden. Das heißt, die optimierten Größen führen auch dann nicht zu einer Verletzung der Nebenbedingungen, wenn die Einspeise-Wirkleistung der erneuerbaren Energiequelle WP und die Wirklast des Verbrauchers L innerhalb der ersten Toleranzbereiche schwanken.

Der Prozess zur robusten Optimierung benutzt bei seiner Ausführung das erste und zweite Lastflussmodell, um die modellierten und übermittelten Lastflüsse und Wirkleistungsflüsse PF1, PF2, PF3, PG und PW, die Netzspannung U, die Frequenzen f1 und f2, die Referenz-Netzfrequenz f_{ref}, den Referenz-Wirkleistungsfluss PF_{ref}, die Referenz-Netzgleichspannung U_{ref}, die Referenz-Wirkleistung PG_{ref} sowie die Koppelparameter Kᵤ, K_{f} und KG_{f} zu einem dynamischen Modell des Stromnetzes SN zu kombinieren. Dabei werden die übermittelten ersten Toleranzbereiche [PWₘᵢₙ, PWₘₐₓ] und [PLₘᵢₙ, PLₘₐₓ] als Robuste-Optimierungs-Unsicherheiten und die zweiten Toleranzbereiche als Nebenbedingungen benutzt.

Im Verlauf der robusten Optimierung werden die Koppelparameter Kᵤ, K_{f}, KG_{f} sowie der Referenz-Wirkleistungsfluss PF_{ref}, die Referenz-Netzgleichspannung U_{ref} und die Referenz-Wirkleistung PG_{ref} derart bestimmt, dass die Kostenfunktion minimiert wird.

Die optimierten Größen Kᵤ, K_{f}, KG_{f}, PF_{ref}, PG_{ref} und U_{ref} werden anschließend von der Steuereinrichtung CTL an die betreffenden Netzkomponenten zum Steuern des Stromnetzes SN übermittelt. An den Generator G wird hierbei die Angabe über die Referenz-Wirkleistung PG_{ref} als Sollwert und der Koppelparameter KG_{f} als Proportionalitätskonstante des P(f)-Proportionalreglers des Generators G übermittelt. Durch den übermittelten Koppelparameter KG_{f} wird die Regelcharakteristik des P(f)-Proportionalreglers des Generators G derart eingestellt, dass dessen Einspeise-Wirkleistung geregelt wird gemäß: PG = PG_{ref} - KG_{f} * (f1 - f_{ref}).

Entsprechend werden zum Konverter K1 als Optimierungsergebnisse die Angabe über die Referenz-Netzgleichspannung U_{ref} und die Angabe über einen Referenz-Wirkleistungsfluss PF_{ref} des Konverters K1 jeweils als Sollwert übermittelt. Darüber hinaus werden die optimierten Koppelparameter K_{f} und Kᵤ als Proportionalitätskonstanten des P(f,U)-Proportionalreglers des Konverters K1 übermittelt. Die Regelcharakterisik des Konverters K1 wird durch die übermittelten Koppelparameter K_{f} und Kᵤ derart eingestellt, dass der Wirkleistungsfluss geregelt wird gemäß: PF1 = PF_{ref} - Kᵤ * (U - U_{ref}) + K_{f} * (f1 - f_{ref}). Analog dazu werden korrespondierende Optimierungsergebnisse auch zu den Konvertern K2 und K3 übermittelt.

Der obige Prozess zur robusten Optimierung wird erneut ausgeführt, wenn aktualisierte erste Toleranzbereiche zur Steuereinrichtung CTL übermittelt werden.

Das erfindungsgemäße Verfahren kann vorzugsweise im laufenden Betrieb des Stromnetzes SN und insbesondere in Echtzeit ausgeführt werden.

Durch Verwendung eines Prozesses zur robusten Optimierung zusammen mit den ersten Toleranzbereichen als Robuste-Optimierungs-Unsicherheiten können die Regelcharakteristiken des Generators G und der Konverter K1, K2 und K3 unter Einhaltung der Nebenbedingungen optimiert werden, auch wenn die tatsächlichen Einspeise-Wirkleistungen bzw. Wirklasten vorab nicht genau bekannt sind oder Schwankungen unterworfen sind. Auf dieses Weise kann das Stromnetz SN insbesondere bei volatilen Generatoren und Verbrauchern in der Regel in stabiler Weise gesteuert werden. Insbesondere erhöht die Optimierung der Regelcharakteristiken die Stabilität des Stromnetzes, insofern das Stromnetz SN auch ohne direkten Eingriff der Steuereinrichtung CTL für längere Zeitintervalle innerhalb seiner Betriebsgrenzen betrieben werden kann.

## Patentansprüche

1. Verfahren zum Steuern eines Stromnetzes (SN), das ein Wechselstromnetz (AC1, AC2) und ein daran über einen Konverter (K1, K2, K3) gekoppeltes Gleichstromnetz (DC) umfasst, wobei
a) ein erster Lastfluss im Wechselstromnetz (AC1, AC2) mittels eines ersten Lastflussmodells und ein zweiter Lastfluss im Gleichstromnetz (DC) mittels eines zweiten Lastflussmodells modelliert werden,
b) durch den Konverter (K1, K2, K3) ein Wirkleistungsfluss (PF1, PF2, PF3) zwischen dem Wechselstromnetz (AC1, AC2) und dem Gleichstromnetz (DC) in Abhängigkeit von einer Netzspannung (U) des Gleichstromnetzes (DC) geregelt wird, wobei diese Abhängigkeit in einer Regelcharakteristik des Konverters mittels eines ersten Koppelparameters (Kᵤ) einstellbar ist,
c) ein erster Toleranzbereich für eine Einspeise-Wirkleistung (PG, PW) eines Generators (G, WP) und/oder für eine Wirklast (PL) eines Verbrauchers (L) eingelesen wird,
d) ein Prozess zur robusten Optimierung einer vorgegebenen Kostenfunktion unter Benutzung des ersten Toleranzbereichs als Robuste-Optimierungs-Unsicherheit ausgeführt wird, wobei mittels des ersten und zweiten Lastflussmodells der erste und der zweite Lastfluss, der Wirkleistungsfluss (PF1, PF2, PF3), die Netzspannung (U) des Gleichstromnetzes (DC) sowie der erste Koppelparameter (Kᵤ) kombiniert werden und der erste Koppelparameter (Kᵤ) derart bestimmt wird, dass die Kostenfunktion optimiert wird, und
e) die Regelcharakteristik des Konverters (K1, K2, K3) mittels des so bestimmten ersten Koppelparameters (Kᵤ) eingestellt wird.

2. Verfahren nach Anspruch 1, **dadurch gekennzeichnet,**
**dass** ein zweiter Toleranzbereich für eine Netzfrequenz (f1, f2) des Wechselstromnetzes (AC1, AC2), für eine Netzspannung (U) des Gleichstromnetzes (DC) und/oder für eine Leitungsauslastung im Stromnetz (SN) eingelesen wird, und
**dass** der Prozess zur robusten Optimierung mit dem zweiten Toleranzbereich als Nebenbedingung ausgeführt wird.

3. Verfahren nach einem der vorhergehenden Ansprüche, **dadurch gekennzeichnet,**
**dass** der Wirkleistungsfluss (PF1, PF2, PF3) in Abhängigkeit von einer Netzfrequenz (f1, f2) des Wechselstromnetzes (AC1, AC2) geregelt wird, wobei diese Abhängigkeit in der Regelcharakteristik des Konverters (K1, K2, K3) mittels eines zweiten Koppelparameters (K_{f}) einstellbar ist,
**dass** die Netzfrequenz (f1, f2) sowie der zweite Koppelparameter (K_{f}) mittels des ersten und zweiten Lastflussmodells in den Prozess zur robusten Optimierung einbezogen werden,
**dass** der zweite Koppelparameter (K_{f}) derart bestimmt wird, dass die Kostenfunktion optimiert wird, und
**dass** die Regelcharakteristik des Konverters (K1, K2, K3) mittels des so bestimmten zweiten Koppelparameters (K_{f}) eingestellt wird.

4. Verfahren nach einem der vorhergehenden Ansprüche, **dadurch gekennzeichnet,**
**dass** eine Einspeise-Wirkleistung (PG) eines Generators (G) im Wechselstromnetz (AC1) in Abhängigkeit von einer Netzfrequenz (f1) des Wechselstromnetzes (AC1) geregelt wird, wobei diese Abhängigkeit in einer Regelcharakteristik des Generators (G) mittels eines dritten Koppelparameters (KG_{f}) einstellbar ist, dass die Einspeise-Wirkleistung (PG) des Generators (G) sowie der dritte Koppelparameter (KG_{f}) mittels des ersten Lastflussmodells in den Prozess zur robusten Optimierung einbezogen werden,
**dass** der dritte Koppelparameter (KG_{f}) derart bestimmt wird, dass die Kostenfunktion optimiert wird, und
**dass** die Regelcharakteristik des Generators (G) mittels des so bestimmten dritten Koppelparameters (KG_{f}) eingestellt wird.

5. Verfahren nach einem der vorhergehenden Ansprüche, **dadurch gekennzeichnet,**
**dass** eine Einspeise-Wirkleistung eines Generators im Gleichstromnetz (DC) in Abhängigkeit von einer Netzspannung (U) des Gleichstromnetzes (DC) geregelt wird, wobei diese Abhängigkeit in einer Regelcharakteristik des Generators mittels eines vierten Koppelparameters einstellbar ist,
**dass** die Einspeise-Wirkleistung des Generators sowie der vierte Koppelparameter mittels des zweiten Lastflussmodells in den Prozess zur robusten Optimierung einbezogen werden, dass der vierte Koppelparameter derart bestimmt wird, dass die Kostenfunktion optimiert wird, und
**dass** die Regelcharakteristik des Generators mittels des so bestimmten vierten Koppelparameters eingestellt wird.

6. Verfahren nach einem der vorhergehenden Ansprüche, **dadurch gekennzeichnet,**
**dass** die Regelung des Wirkleistungsflusses (PF1, PF2, PF3) und/oder einer Einspeise-Wirkleistung (PG, PW) mittels eines Proportionalreglers (P(f), P(f,U)) erfolgt.

7. Verfahren nach einem der vorhergehenden Ansprüche, **dadurch gekennzeichnet,**
**dass** eine aktuelle Einspeise-Wirkleistung (PG, PW) des Generators (G, WP) und/oder eine aktuelle Wirklast (PL) des Verbrauchers (L) als physikalische Betriebsgröße in den Prozess zur robusten Optimierung einbezogen wird.

8. Verfahren nach einem der vorhergehenden Ansprüche, **dadurch gekennzeichnet,**
**dass** eine Angabe über einen Referenz-Wirkleistungsfluss (PF_{ref}) des Konverters (K1, K2, K3), über eine Referenz-Netzgleichspannung (U_{ref}) des Konverters und/oder über eine Referenz-Wirkleistung (PG_{ref}) des Generators (G) als Ergebnis des Prozesses zur robusten Optimierung zum Konverter (K1, K2, K3) und/oder zum Generator (G) als Sollwert übermittelt wird.

9. Verfahren nach einem der vorhergehenden Ansprüche, **dadurch gekennzeichnet,**
**dass** das erste Lastflussmodell und/oder das zweite Lastflussmodell ein System von Lastflussgleichungen umfasst.

10. Verfahren nach Anspruch 9, **dadurch gekennzeichnet,**
**dass** das System von Lastflussgleichungen ein System von linearisierten Lastflussgleichungen umfasst.

11. Verfahren nach einem der vorhergehenden Ansprüche, **dadurch gekennzeichnet,**
**dass** in der Kostenfunktion Leistungsverluste im Stromnetz (SN), Dispatch-Verluste, Primärregelleistungsverluste und/oder Abweichungen zwischen aktuellen Betriebsgrößen und Referenz-Betriebsgrößen gewichtet werden.

12. Steuereinrichtung (CTL) zum Steuern eines Stromnetzes (SN), eingerichtet zum Ausführen eines Verfahrens nach einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach Anspruch 13.

## Claims

1. Method for controlling an electricity grid (SN) comprising an AC electricity grid (AC1, AC2) and a DC electricity grid (DC) coupled thereto via a converter (K1, K2, K3), wherein
a) a first load flow in the AC electricity grid (AC1, AC2) is modeled by means of a first load flow model and a second load flow in the DC electricity grid (DC) is modeled by means of a second load flow model,
b) the converter (K1, K2, K3) controls an active power flow (PF1, PF2, PF3) between the AC electricity grid (AC1, AC2) and the DC electricity grid (DC) in dependence on a grid voltage (U) of the DC electricity grid (DC), wherein this dependence is adjustable in a control characteristic of the converter by means of a first coupling parameter (Kᵤ),
c) a first tolerance range for an infeed active power (PG, PW) of a generator (G, WP) and/or for an active load (PL) of a consumer (L) is read in,
d) a process for robust optimization of a predefined cost function is performed using the first tolerance range as robust optimization uncertainty, wherein, by means of the first and second load flow models, the first and second load flows, the active power flow (PF1, PF2, PF3), the grid voltage (U) of the DC electricity grid (DC) and also the first coupling parameter (Kᵤ) are combined and the first coupling parameter (Kᵤ) is determined in such a way that the cost function is optimized, and
e) the control characteristic of the converter (K1, K2, K3) is set by means of the first coupling parameter (Kᵤ) determined in this way.

2. Method according to Claim 1, **characterized**
**in that** a second tolerance range for a grid frequency (f1, f2) of the AC electricity grid (AC1, AC2), for a grid voltage (U) of the DC electricity grid (DC) and/or for a line capacity utilization in the electricity grid (SN) is read in, and
**in that** the process for robust optimization is performed with the second tolerance range as a constraint.

3. Method according to either of the preceding Claims, **characterized**
**in that** the active power flow (PF1, PF2, PF3) is controlled in dependence on a grid frequency (f1, f2) of the AC electricity grid (AC1, AC2), wherein this dependence is adjustable in the control characteristic of the converter (K1, K2, K3) by means of a second coupling parameter (K_{f}),
**in that** the grid frequency (f1, f2) and also the second coupling parameter (K_{f}) are included in the process for robust optimization by means of the first and second load flow models,
**in that** the second coupling parameter (K_{f}) is determined in such a way that the cost function is optimized, and
**in that** the control characteristic of the converter (K1, K2, K3) is set by means of the second coupling parameter (K_{f}) determined in this way.

4. Method according to any of the preceding Claims, **characterized**
**in that** an infeed active power (PG) of a generator (G) in the AC electricity grid (AC1) is controlled in dependence on a grid frequency (f1) of the AC electricity grid (AC1), wherein this dependence is adjustable in a control characteristic of the generator (G) by means of a third coupling parameter (KG_{f}),
**in that** the infeed active power (PG) of the generator (G) and also the third coupling parameter (KG_{f}) are included in the process for robust optimization by means of the first load flow model,
**in that** the third coupling parameter (KG_{f}) is determined in such a way that the cost function is optimized, and in that the control characteristic of the generator (G) is set by means of the third coupling parameter (KG_{f}) determined in this way.

5. Method according to any of the preceding Claims, **characterized**
**in that** an infeed active power of a generator in the DC electricity grid (DC) is controlled in dependence on a grid voltage (U) of the DC electricity grid (DC), wherein this dependence is adjustable in a control characteristic of the generator by means of a fourth coupling parameter,
**in that** the infeed active power of the generator and also the fourth coupling parameter are included in the process for robust optimization by means of the second load flow model,
**in that** the fourth coupling parameter is determined in such a way that the cost function is optimized, and
**in that** the control characteristic of the generator is set by means of the fourth coupling parameter determined in this way.

6. Method according to in any of the preceding Claims, **characterized**
**in that** the control of the active power flow (PF1, PF2, PF3) and/or of an infeed active power (PG, PW) is carried out by means of a proportional controller (P(f), P(f,U)).

7. Method according to in any of the preceding Claims, **characterized**
**in that** a present infeed active power (PG, PW) of the generator (G, WP) and/or a present active load (PL) of the consumer (L) are/is included as physical operating variable in the process for robust optimization.

8. Method according to any of the preceding Claims, **characterized**
**in that** an indication about a reference active power flow (PF_{ref}) of the converter (K1, K2, K3), about a reference grid DC voltage (U_{ref}) of the converter and/or about a reference active power (PG_{ref}) of the generator (G) as the result of the process for robust optimization is communicated to the converter (K1, K2, K3) and/or to the generator (G) as setpoint value.

9. Method according to any of the preceding Claims, **characterized**
**in that** the first load flow model and/or the second load flow model comprise(s) a system of load flow equations.

10. Method according to in Claim 9, **characterized**
**in that** the system of load flow equations comprises a system of linearized load flow equations.

11. Method according to any of the preceding Claims, **characterized**
**in that** power losses in the electricity grid (SN), dispatch losses, primary control power losses and/or deviations between present operating variables and reference operating variables are weighted in the cost function.

12. Control device (CTL) for controlling an electricity grid (SN), configured for performing a method according to any of the preceding Claims.

13. Computer program product configured for performing a method according to any of Claims 1 to 11.

14. Computer-readable storage medium comprising a computer program product according to Claim 13.

## Revendications

1. Procédé de commande d'un réseau électrique (SN) qui comprend un réseau de courant alternatif (AC1, AC2) et un réseau de courant continu (DC) qui y est couplé via un convertisseur (K1, K2, K3),
a) un premier flux de charge étant modélisé dans le réseau de courant alternatif (AC1, AC2) au moyen d'un premier modèle de flux de charge et un deuxième flux de charge étant modélisé dans le réseau de courant continu (DC) au moyen d'un deuxième modèle de flux de charges ;
b) un flux de puissance active (PF1, PF2, PF3) entre le réseau de courant alternatif (AC1, AC2) et le réseau de courant continu (DC) étant réglé par le convertisseur (K1, K2, K3) en fonction d'une tension de réseau (U) du réseau de courant continu (DC), cette dépendance pouvant être réglée dans une caractéristique de réglage du convertisseur au moyen d'un premier paramètre de couplage (Ku) ;
c) une première plage de tolérance pour une puissance active d'injection (PG, PW) d'un générateur (G, WP) et/ou pour une charge active (PL) d'un consommateur (L) étant lue ;
d) un processus d'optimisation robuste d'une fonction de coût donnée étant exécutée en utilisant la première plage de tolérance en tant qu'incertitude d'optimisation robuste, le premier et le deuxième flux de charge, le flux de puissance active (PF1, PF2, PF3), la tension de réseau (U) du réseau de courant continu (DC) ainsi que le premier paramètre de couplage (Ku) étant combinés au moyen du premier et du deuxième modèle de flux de charge et le premier paramètre de couplage (Ku) étant déterminé de telle sorte que la fonction de coût est optimisée et
e) la caractéristique de réglage du convertisseur (K1, K2, K3) étant réglée au moyen du premier paramètre de couplage (Ku) ainsi déterminé.

2. Procédé selon la revendication 1, **caractérisé en ce qu'**est lue une deuxième plage de tolérance pour une fréquence de réseau (f1, f2) du réseau de courant alternatif (AC1, AC2), pour une tension de réseau (U) du réseau de courant continu (DC) et/ou pour une utilisation de ligne dans le réseau électrique (SN) et **en ce que** le processus d'optimisation robuste est exécuté avec la deuxième plage de tolérance comme contrainte.

3. Procédé selon l'une des revendications précédentes, **caractérisé en ce que** :
le flux de puissance active (PF1, PF2, PF3) est réglé en fonction d'une fréquence de réseau (f1, f2) du réseau de courant alternatif (AC1, AC2), cette dépendance pouvant être réglée dans la caractéristique de réglage du convertisseur (K1, K2, K3) au moyen d'un deuxième paramètre de couplage (Kf) ;
la fréquence de réseau (f1, f2) ainsi que le deuxième paramètre de couplage (Kf) sont intégrés au processus d'optimisation robuste au moyen du premier et du deuxième modèle de flux de charge ;
le deuxième paramètre de couplage (Kf) est déterminé de manière telle que
la fonction de coût est optimisée et
la caractéristique de réglage du convertisseur (K1, K2, K3) est réglée au moyen du deuxième paramètre de couplage (Kf) ainsi déterminé.

4. Procédé selon l'une des revendications précédentes, **caractérisé en ce que** :
une puissance active d'injection (PG) d'un générateur (G), dans le réseau de courant alternatif (AC1), est réglée en fonction d'une fréquence de réseau (f1) du réseau de courant alternatif (AC1), cette dépendance pouvant être réglée dans une caractéristique de réglage du générateur (G) au moyen d'un troisième paramètre de couplage (KGf) ;
la puissance active d'injection (PG) du générateur (G) ainsi que le troisième paramètre de couplage (KGf) sont intégrés au processus d'optimisation robuste au moyen du premier modèle de flux de charge ;
le troisième paramètre de couplage (KGf) est déterminé de manière telle que
la fonction de coût est optimisée et
la caractéristique de réglage du générateur (G) est réglée au moyen du troisième paramètre de couplage (KGf) ainsi déterminé.

5. Procédé selon l'une des revendications précédentes, **caractérisé en ce que** :
une puissance active d'injection d'un générateur, dans le réseau de courant continu (DC), est réglée en fonction d'une tension de réseau (U) du réseau de courant continu (DC), cette dépendance pouvant être réglée dans une caractéristique de réglage du générateur au moyen d'un quatrième paramètre de couplage ;
la puissance active d'injection du générateur ainsi que le quatrième paramètre de couplage sont intégrés au processus d'optimisation robuste au moyen du deuxième modèle de flux de charge ;
le quatrième paramètre de couplage est déterminé de manière telle que
la fonction de coût est optimisée et
la caractéristique de réglage du générateur est réglée au moyen du quatrième paramètre de couplage ainsi déterminé.

6. Procédé selon l'une des revendications précédentes, **caractérisé en ce que** le réglage du flux de puissance active (PF1, PF2, PF3) et/ou d'une puissance active d'injection (PG, PW) se fait au moyen d'un régulateur proportionnel (P(f), P(f,U)).

7. Procédé selon l'une des revendications précédentes, **caractérisé en ce qu'**une puissance active d'injection actuelle (PG, PW) du générateur (G, WP) et/ou une charge active actuelle (PL) du consommateur (L) sont intégrées au processus d'optimisation robuste en tant que grandeur physique de fonctionnement.

8. Procédé selon l'une des revendications précédentes, **caractérisé en ce qu'**une information sur un flux de puissance active de référence (PFref) du convertisseur (K1, K2, K3), sur une tension continue de réseau de référence (Uref) du convertisseur et/ou sur une puissance active de référence (PGref) du générateur (G) est transmise en tant que valeur de consigne au convertisseur (K1, K2, K3) et/ou au générateur (G) en tant que résultat du processus d'optimisation robuste.

9. Procédé selon l'une des revendications précédentes, **caractérisé en ce que** le premier modèle de flux de charge et/ou le deuxième modèle de flux de charge comprennent un système d'équations de flux de charge.

10. Procédé selon la revendication 9, **caractérisé en ce que** le système d'équations de flux de charge comprend un système d'équations de flux de charge linéarisées.

11. Procédé selon l'une des revendications précédentes, **caractérisé en ce que** sont pondérées, dans la fonction de coût, des pertes de puissance dans le réseau électrique (SN), des pertes de répartition, des pertes de puissance de réglage primaire et/ou des différences entre des grandeurs de fonctionnement actuelles et des grandeurs de fonctionnement de référence.

12. Dispositif de commande (CTL) pour commander un réseau électrique (SN), configuré pour exécuter un procédé selon l'une des revendications précédentes.

13. Produit de programme informatique configuré pour exécuter un procédé selon l'une des revendications 1 à 11.

14. Support de mémoire lisible par ordinateur avec un produit de programme informatique selon la revendication 13.
